# EUROPEAN PATENT APPLICATION

(11) **EP 2 273 733 A1**
(43) Date of publication of application: **12.01.2011**
(21) Application number: 09735736.2
(22) Date of filing: 23.03.2009
(51) Int. Cl.: H04L 12/56

(54) **METHOD, MEDIA GATEWAY AND SYSTEM FOR SESSION STATE REPORTING**

(30) Priority: 21.04.2008 CN 200810066670
(71) Applicant: Huawei Technologies Co., Ltd., Longgang District, Shenzhen Guangdong 518129 (CN)
(72) Inventor: YANG, Weiwei, Shenzhen Guangdong Province 518129 (CN)
(74) Representative: Pfenning, Meinig & Partner GbR
(86) International application number: PCT/CN2009/070950
(87) International publication number: WO 2009/129712

(57) **Abstract**

A method for reporting a session state is disclosed herein. The method includes: setting a state expiration event on a Media Gateway (MG); and the MG judges whether a bearer session state has expired according to the state expiration event, and reports the state expiration event to a Media Gateway Controller (MGC) if the bearer session state has expired. Moreover, an MG and a system for reporting a session state are disclosed. By using the method, apparatus, and system herein, the MGC and the MG can control the session state of bearer resource in a simple and effective way.

## Description

This application claims priority to Chinese Patent Application No. 200810066670.8, filed with the Chinese Patent Office on April 21, 2008 and entitled "METHOD, MEDIA GATEWAY AND SYSTEM FOR REPORTING A SESSION STATE", which is hereby incorporated by reference in its entirety.

### FIELD OF THE INVENTION

The present invention relates to a technical field of mobile communications, and in particular, to a method, a Media Gateway (MG), and a system for reporting a session state.

### BACKGROUND OF THE INVENTION

In order to set up a bearer path with resource assurance, a Media Gateway Controller (MGC) and a Media Gateway (MG) use Resource Reservation Protocol (RSVP) to communicate with User Equipment (UE) and other bearer entities, negotiate and set up a resource reservation session. The RSVP session is used to reserve resources for unidirectional flows. Therefore, in the general bidirectional media data transmission service, it is necessary to set up an RSVP session for the media data in each direction. In the media data transmission session in different directions, the MG acts as different roles, including a data sender and a data receiver. Regardless of the role of data sender or data receiver, the MGC and the MG need to process plenty of RSVP messages to set up the bearer path and maintain the state of the bearer path. For example, the MGC instructs the MG to detect the received RSVP Path message or RSVP Resv message by setting an event. After detecting the foregoing messages, the MG reports relevant information carried in the message to the MGC by means of an event so that the MGC can perform authorization and response according to a local policy.

The existing technology has at least the following problems: the RSVP session is characterized by "soft state", namely, the state of the created bearer path needs to be maintained by means of periodical RSVP messages. Therefore, subsequent to the first RSVP Path message or RSVP Resv message, the sender of the message needs to send the session state refresh message (namely, RSVP Path message or RSVP Resv message) periodically to maintain the session. In this way, the MG receives plenty of duplicate RSVP messages periodically. If the MG triggers to report the relevant event to the MGC every time after receiving such messages, the messages on the interface between the MGC and the MG increase massively, and most of the messages are duplicate. However, if the MG reports the event to the MGC only at the first time of receiving the RSVP message, the MGC is unable to know the state of the RSVP session on the bearer path in time.

The same problem occurs in other similar scenarios in which a soft state protocol is used to communicate with the MG and the MGC. In the current gateway control protocol such as H.248 protocol, no effective mechanism is available for solving such problems.

### SUMMARY OF THE INVENTION

The embodiments of the present invention provide a method, an MG, and a system for reporting a session state to enable the MGC and the MG to control the session state of bearer resource in a simple and effective way and know expiration of the session state in time.

A method for reporting a session state includes:
setting a state expiration event on an MG; and
judging, by the MG, whether a bearer session state has expired according to the state expiration event, and reporting the state expiration event to the MGC if the bearer session state has expired.

An MG includes:
a setting unit, configured to set a state expiration event;
a judging unit, configured to judge whether a bearer session state has expired according to the state expiration event set by the setting unit; and
a sending unit, configured to report the state expiration event to the MGC if the judging unit determines that the bearer session state has expired.

A communications system includes:
an MG, configured to set a state expiration event, judge whether a bearer session state has expired, and report the state expiration event to the MGC if the bearer session state has expired; and
an MGC, configured to receive the state expiration event sent by the MG.

Compared with the existing technology, the embodiments of the present invention extend the protocol applied between the MGC and the MG, and define a mechanism for detecting state of the resource session on the MG by means of the extended state expiration event; the MG detects and monitors the state of the resource session, and notifies to the MGC in time when the resource session state expires. Therefore, it is not necessary to transmit plenty of duplicate information on the interface between the MGC and the MG for maintaining the session state, and thus a simple and effective solution is available for the MGC and the MG to control the state of the bearer resource session.

### BRIEF DESCRIPTION OF THE DRAWINGS

FIG. 1 is a networking diagram of an MG and MGC;
FIG. 2 is a flowchart of a method for reporting a session state in an embodiment of the present invention;
FIG. 3 is a flowchart of a method for reporting a session state in an embodiment of the present invention;
FIG. 4 is a signaling flowchart of a method for reporting a session state in an embodiment of the present invention; and
FIG. 5 shows a system in an embodiment of the present invention.

### DETAILED DESCRIPTION OF THE EMBODIMENTS

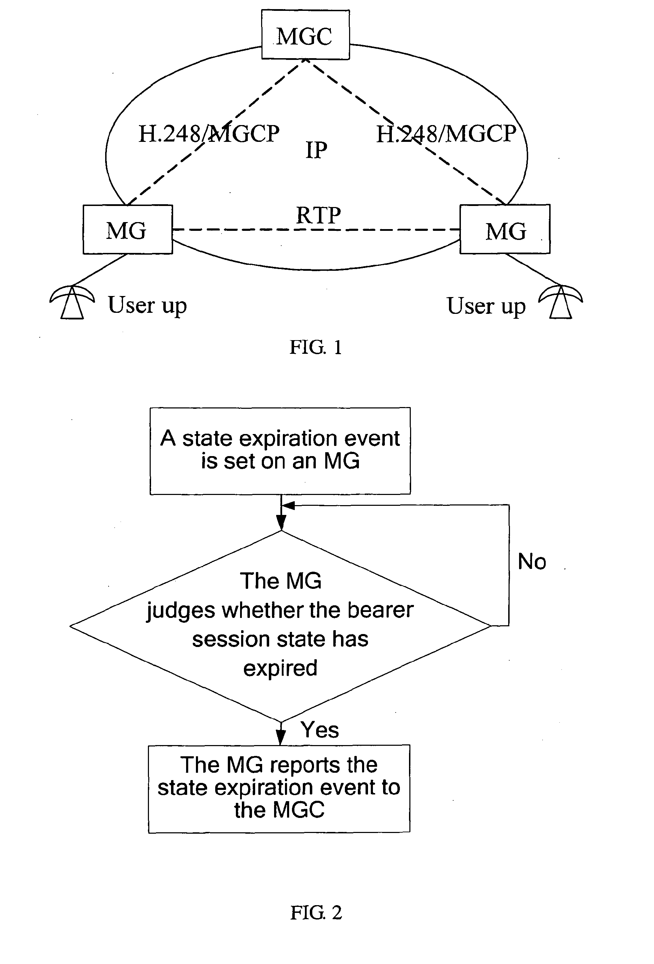

As shown in FIG. 1, the MGC and the MG are two key components in a packet-switched network. The MGC is responsible for the call control function, and the MG is responsible for the service bearing function. In this way, the call control plane is separated from the service bearer plane, network resources are shared sufficiently, device upgrade and service extension are simplified, and the costs of development and maintenance are slashed.

The (media) gateway control protocol is a main protocol for communication between the MG and the MGC. Currently, two commonly used gateway control protocols are H.248/MeGaCo and Media Gateway Control Protocol (MGCP).

Taking the H.248 protocol as an example, various resources on the MG are abstractly expressed as terminations. Terminations are categorized into physical termination and ephemeral termination. A physical termination represents a physical entity of semi-permanent existence, for example, Time Division Multiplex (TDM) channels; and an ephemeral termination represents a public resource released after the resource is requested for temporary use and released after the use, for example, Real-Time Transport Protocol (RTP) streams. A root termination represents the entirety of the MG. Combinations of terminations are abstractly expressed as context. A context may include multiple terminations. Therefore, relationships between terminations are depicted by topology. A termination not associated with any other termination is included in a special context called "null".

Based on such an abstract model of the protocol, call connection is essentially equivalent to operations for terminations and contexts. Such operations are performed by means of command requests and replies exchanged between the MGC and the MG. The commands include: Add, Modify, Subtract, Move, AuditValue, AuditCapabilities, Notify, and ServiceChange. Command parameters, also known as descriptors, are categorized into Property, Signal, Event, and Statistic. Service-dependent parameters aggregate into a package logically.

As shown in FIG. 2, a method for reporting a session state in an embodiment of the present invention includes:
A state expiration event is set on an MG.

The MG judges whether a bearer session state has expired according to the state expiration event, and reports the state expiration event to the MGC if the bearer session state has expired.

In a scenario in which uses the RSVP to set up a resource reservation session, the MG receives RSVP Path messages or RSVP Resv messages from the UE periodically to maintain the session state. Such duplicate refresh messages are designed to retain and maintain the state of the specific RSVP session on the entire bearer path. Because such refresh messages are massively duplicated, the MG does not need to report them to the MGC one by one. In order for the MGC to know the state of the bearer resource session in time, the MG needs to report the state expiration event to the MGC when the MG detects expiration of the bearer session state. Before the MGC receives the state expiration event, it is regarded that the resource session is maintained normally.

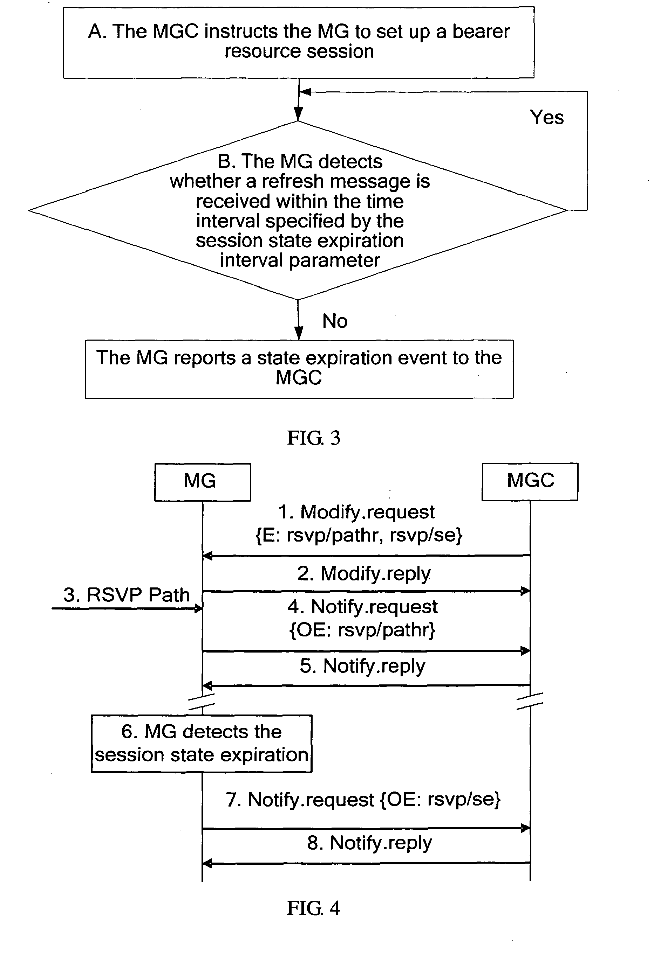

As shown in FIG. 3, a method for reporting a session state in an embodiment of the present invention includes the following steps:
A. The MGC instructs the MG to set up a bearer resource session. After the bearer resource session is set up, the MG detects the state of the bearer session according to the session state expiration condition. The session state expiration condition may be a time interval of session state expiration, namely, a timer of the session state expiration; or the session state expiration condition may be message trigger rules or other resource policy rules.
   This step, in which the MGC instructs the MG to set up a bearer resource session, includes but is not limited to: the MGC instructs the MG to detect a bearer resource request event and the MGC requires the MG to send a path setup request according to a relevant policy.
B. The MG detects occurrence of the session state expiration condition, namely, detects the state of the session. For example, the MG detects whether a refresh message is received within the time interval specified by the session state expiration interval parameter; if the refresh message is received within the time interval, the MG resets the session state expiration condition, for example, restarts the timer; if the refresh message is not received within the time interval, it indicates that the session state has expired, and the MG reports a state expiration event to the MGC, namely, notifies the MGC that the session state has expired. After receiving the state expiration event, the MGC may instruct the MG to release the session-related bearer resource, and terminate the session. The MG receives the RSVP Path message or RSVP Resv message from the UE periodically, but the MG does not need to report them to the MGC one by one. In order for the MGC to know the state of the bearer resource session in time, it is regarded that the state of the bearer resource session has expired if the MG receives no resource reservation session refresh message (RSVP Path message or RSVP Resv message) within the time interval specified by the session state expiration interval parameter. In this case, the MG needs to report a state expiration event to the MGC so that the MGC makes a corresponding decision, for example, disconnects the session or releases the relevant bearer resources.

To implement the foregoing embodiment, the present invention defines the following mechanism in the H.248 protocol:
1. An event parameter is defined as a session state expiration condition. The event parameter serves the functions of a timer, and symbolizes the time interval of the session state expiration, that is, the time period after which a session state expires. For example, the event parameter is named as State Expiration Interval (sei). Generally, the message of the soft state protocol has a refresh period, namely, the message sender sends a refresh message again every refresh period. Therefore, the time interval specified by the state expiration interval parameter may be greater than the period of sending the refresh message. The parameter may be preset on the MG. The value of the parameter is the default general value of the session state expiration time interval, or the parameter may be delivered by the MGC to the MG, and therefore, the MGC may change the value of the state expiration interval parameter when necessary, and the control is more convenient and flexible. This parameter may be carried in an existing or new bearer request event, for example, a path request receiving event (Path Received, rsvp/pathr) or reservation request receiving event (Resv Received, rsvp/resvr) of an H.248 RSVP package.
   Further, the type of the event parameter "sei" may be defined as integer, and the parameter value is measured in milliseconds. The session expiration interval value is set as a value of several times of the message refresh period value to allow loss of some messages in the network. In addition, the parameter may be defined not only as an event parameter, but also as a property or signal in the H.248.
2. An event is defined for the MG to detect and report expiration of the session state of bearer resource. This event is defined that the state of the bearer session has expired when the MG detects occurrence of the session state expiration condition, for example, the MG receives no session refresh message within the time interval specified by the session state expiration interval parameter. In this case, the MG reports session state expiration to the MGC. For example, the event is named as State Expiration (se). This event may be carried in an existing or new package, for example, an extended H.248.RSVP package, and may be named as State Expiration Detection (sed) Package.

Further, in the H.248, the detecting and reporting of an event need presetting or delivery. Therefore, in order for the MG to detect the state expiration event, a state expiration event (such as rsvp/se, supposing that the se event is defined in an RSVP package) needs to be set on the MG. This event may be delivered by the MGC to the MG, or preset on the MG. The event may be delivered to the root termination of the MG, indicating detection of the state expiration event for the entire MG; or the event is delivered to a specific termination of the MG, indicating detection of session state on this termination; or the event is delivered to a specific stream on the MG, indicating that the detection of this event is applicable to the specified stream. For example, the MGC delivers the event to the MG in this way: the MGC sets a state expiration event (rsvp/se) by sending a Modify request message to the MG. After receiving the Modify request message, the MG sends a Modify response message to the MGC. The event may carry no parameter.

As shown in FIG. 4, a method for reporting a session state in an embodiment of the present invention includes the following steps:
Step 1: The MGC delivers a request for detecting the path request receiving event (rsvp/pathr) and the state expiration event (rsvp/se) to the MG by means of a Modify request message.

The path request receiving event carries the event parameter defined above: State Expiration Interval (sei) that indicates the state expiration interval of the created resource reservation session. The state expiration interval may be delivered by means of other bearer request events. Here the path request receiving event is taken as an example. In addition, the path request receiving event (rsvp/pathr) and the state expiration event (rsvp/se) may be delivered by means of other messages, for example, Add or Move request message.

Step 2: The MG sends a Modify response message to the MGC, and starts detecting the specified event.

Step 3: The MG receives the first path request message (RSVP Path).

After receiving the first RSVP Path request message from another entity on the bearer such as UE, the MG triggers the path request receiving event, and notifies the corresponding information to the MGC by performing step 4. Meanwhile, the MG needs to store the state information of this session, for example, session parameter information carried in the bearer request message (namely, RSVP Path message in this embodiment, or also known as path request message). The session parameter information includes a session identifier (ID). A bearer resource session generally has a unique session ID, for example, SESSION object in the RSVP. The MG can identify a specific bearer resource session by detecting the session ID.

Step 4: The MG reports the detected path request receiving event (rsvp/pathr) to the MGC by means of a Notify request message. The message carries the relevant parameter information, for example, media data traffic specification information and path state information, to enable the MGC to make further policy decision.

Step 5: The MGC sends a Notify response message to the MG.

Further, after accepting the bearer request, the MGC may instruct the MG to set up the relevant RSVP session, for example, instruct the MG to send an RSVP Resv request message to the UE.

Step 6: After receiving the instruction from the MGC, the MG communicates with the UE by using RSVP, and sets up and maintains an RSVP resource session.

In the process of setting up and maintaining the session, the MG detects the session state according to the session state expiration interval parameter. The state expiration interval parameter is equivalent to a timer. After receiving the RSVP Path refresh message subsequently sent by the UE, the MG identifies a specific resource session according to the ID carried in the received message. That is, the MG compares the session ID carried in the received refresh message with the session IDs on the MG. If the session ID carried in the received refresh message is the same as one of session IDs on the MG, it is determined that the refresh message of the session is received. Further, the MG updates the state of the session, and resets the session state expiration condition, for example, resets the timer.

Further, after the session for refreshing is determined according to the session ID, the refresh message (RSVP Path) received by the MG may be the same as or different from the Path message received previously. For example, the refresh message may carry new session parameter information.

In both circumstances above, the messages have the same session ID, but the request content in the messages is different. If a duplicate RSVP path message has the same content as the RSVP Path message received previously, the MG does not need to report the duplicate path request receiving event to the MGC. If the request content of the received RSVP Path message is different from the request content of the RSVP Path message received previously, the MG needs to report the request content to the MGC by means of a path request receiving event. For example, the previously received RSVP Path message carries only audio session request information, but the new RSVP Path message received includes additional video session request content for the session. After receiving this message, the MG resets the timer, and reports the path request receiving event that carries the received resource request content to the MGC.

Regardless of the content of the received session refresh message, the session state is normal if the MG receives the refresh message.

If the MG detects occurrence of the session state expiration condition, namely, the MG receives no session refresh message within the session state expiration interval, it indicates that the session state has expired. In this case, the MG needs to report the detected session state expiration information to the MGC so as to make further resource decision.

Step 7: The MG reports the detected state expiration event (rsvp/se) by sending a Notify request message to the MGC.

The message sent at the time of reporting the state expiration event may carry parameters indicating the detailed information of the session state, based on which the MGC makes the corresponding policy decision. The parameters carried in the message sent at the time of reporting the state expiration event include:

Session ID (sessionid) parameter, identifying whose session state has expired. The type of this parameter is defined as a string list (Sub-list). In the scenario of applying the RSVP, the value of this parameter may correspond to the SESSION object in the RSVP message, and identifies an RSVP session uniquely.

Step 8: The MGC sends a Notify response message to the MG.

Further, the MGC may instruct the MG to tear down the relevant RSVP session and release the corresponding bearer resource according to the relevant policy rules.

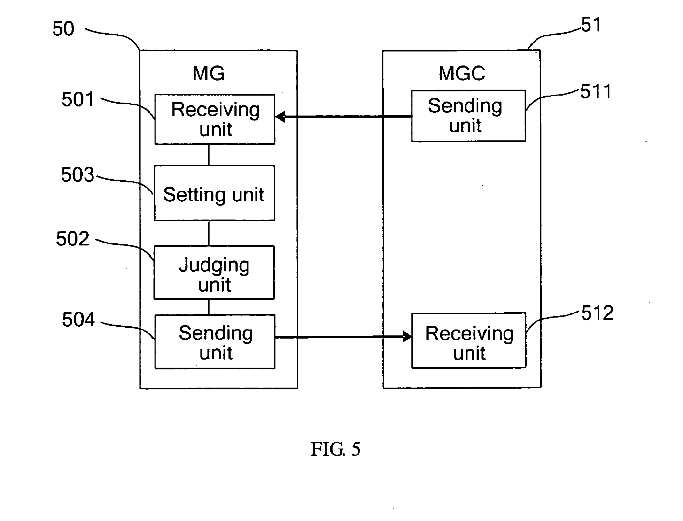

As shown in FIG. 5, a communications system provided in an embodiment of the present invention includes: an MG 50 and an MGC 51.

The MG 50 includes a receiving unit 501, a judging unit 502, a setting unit 503, and a sending unit 504; and the MGC 51 includes a sending unit 511 and a receiving unit 512.

The setting unit 503 is configured to set a state expiration event and a session state expiration condition. The state expiration event may be preset on the setting unit 503 of the MG, or delivered by the sending unit 511 of the MGC to the receiving unit 501 of the MG and then set on the setting unit 503. The session state expiration condition may be preset on the setting unit 503 of the MG, or delivered by the sending unit 511 of the MGC to the receiving unit 501 of the MG and then set on the setting unit 503.

The judging unit 502 is configured to judge whether the bearer session state has expired according to the state expiration event set by the setting unit 503. If the bearer session state has expired, the sending unit 504 sends a state expiration event to the receiving unit 512 of the MGC.

Further, the judging unit 502 detects the state of the bearer session according to the session state expiration condition, where the session state expiration condition is a session state expiration interval. If the receiving unit 501 of the MG receives a session state refresh message within the state session expiration interval, the judging unit 502 determines that the session state expiration condition is not fulfilled, and the session state expiration interval of the setting unit 503 is reset. If the receiving unit 501 receives no session state refresh message within the state session expiration interval, the judging unit 502 determines that the bearer session state has expired, and the sending unit 504 sends a state expiration event to the receiving unit 512 of the MGC.

Further, when the receiving unit 501 of the MG receives a session state refresh message, the judging unit 502 compares the received session state refresh message with the previously received session state refresh message. If the content of the received session state refresh message is the same as the content of the previously received session state refresh message, no bearer request event needs to be triggered; otherwise, the sending unit 504 reports the bearer request event to the receiving unit 512 of the MGC.

After reading the foregoing embodiments, those skilled in the art are clearly aware that the present invention may be implemented by means of hardware, or by means of software in addition to a necessary universal hardware platform. The technical solution under the present invention may be embodied as a software product. The software product may be stored in a non-volatile storage medium (such as CD-ROM, USB flash disk, or mobile hard disk), and may incorporate several instructions that enable a computer device (such as personal computer, server, or network device) to perform the method specified in any embodiment of the present invention.

The above descriptions are merely exemplary embodiments of the present invention, but are not intended to limit the scope of the present invention. Any modification, equivalent replacement, or improvement made without departing from the principles of the present invention shall fall within the scope of the present invention.

## Claims

1. A method for reporting a session state, comprising:
setting a state expiration event on a Media Gateway, MG; and
judging, by the MG, whether a bearer session state has expired according to the state expiration event, and reporting the state expiration event to a Media Gateway Controller, MGC, if the bearer session state has expired.

2. The method according to claim 1, wherein the MG judges whether the bearer session state has expired according to the state expiration event in the following way:
the MG detects bearer session state according to a session state expiration condition, wherein
the session state expiration condition is a session state expiration interval; and
if the MG receives a session state refresh message within the session state expiration interval,
the MG resets the session state expiration interval; if the MG receives no session state refresh message within the session state expiration interval, the MG determines that the bearer session state has expired.

3. The method according to claim 2, wherein:
the session state expiration condition is preset on the MG or delivered by the MGC to the MG.

4. The method according to claim 3, wherein: if the session state expiration condition is delivered by the MGC to the MG, the method further comprises:
adding the session state expiration condition into a Property, Signal or Event parameter of a gateway control protocol and delivering the parameter to the MG.

5. The method according to claim 1, wherein:
the setting the state expiration event on the MG comprises: presetting the state expiration event on the MG, or delivering the state expiration event by the MGC to the MG.

6. The method according to claim 1, further comprising:
comparing, by the MG, content of a received session state refresh message with state information of a current session after receiving the session state refresh message; and reporting a bearer request event to the MGC if they are different.

7. The method according to claim 6, wherein:
the session state refresh message is a Resource Reservation Protocol, RSVP, Path request message or an RSVP Resv request message.

8. A Media Gateway, MG, comprising:
a setting unit, configured to set a state expiration event;
a judging unit, configured to judge whether a bearer session state has expired according to the state expiration event set by the setting unit; and
a sending unit, configured to report the state expiration event to a Media Gateway Controller, MGC, if the judging unit determines that the bearer session state has expired.

9. The MG according to claim 8, wherein:
the judging unit is further configured to detect the bearer session state according to a session state expiration condition, wherein the session state expiration condition is a session state expiration interval; and
the judging unit is further configured to reset the session state expiration interval if the MG receives a session state refresh message within the session state expiration interval; or
determine that the bearer session state has expired if the MG receives no session state refresh message within the session state expiration interval.

10. The MG according to claim 8, wherein:
when the MG receives the session state refresh message, the judging unit is further configured to judge whether content of the received message is the same as session state information; and,
if they are different, report a bearer request event to the MGC by means of the sending unit.

11. A communications system, comprising:
a Media Gateway, MG, configured to: set a state expiration event, judge whether a bearer session state has expired, and report the state expiration event to a Media Gateway Controller, MGC, if the bearer session state has expired; and
the MGC, configured to receive the state expiration event sent by the MG.

12. The communications system according to claim 11, wherein:
the MG is further configured to detect a bearer session state according to a session state expiration condition, wherein the session state expiration condition is a session state expiration interval; and
the MG is further configured to reset the session state expiration interval if the MG receives a session state refresh message within the session state expiration interval; or determine that the bearer session state has expired if the MG receives no session state refresh message within the session state expiration interval.
